# EUROPÄISCHE PATENTSCHRIFT

(11) **EP 2 194 369 B1**
(45) Veröffentlichungstag und Bekanntmachung des Hinweises auf die Patenterteilung: **01.08.2012**
(21) Anmeldenummer: 08170541.0
(22) Anmeldetag: 03.12.2008
(51) Int. Cl.: G01N 1/18, G01N 7/00

(54) **Probenahme-Einrichtung**
Sampling device
Dispositif de prélèvement d'échantillon

(43) Veröffentlichungstag der Anmeldung: 09.06.2010
(73) Patentinhaber: Mettler-Toledo AG, 8606 Greifensee (CH)
(72) Erfinder: Anders, Klaus-Dieter, 5452, Oberrohrdorf (CH); Radanovic, Dragan, 8620, Wetzikon (CH)

(56) Entgegenhaltungen:
- EP-A- 0 508 749
- WO-A-03/044488
- US-A- 3 948 607
- US-A- 3 991 055
- US-A- 4 244 919
- US-A- 4 811 611

## Beschreibung

Die Erfindung betrifft eine Probenahme-Einrichtung und ein Verfahren zur Probenahme aus einem druckbeaufschlagten und/oder flüchtige Bestandteile enthaltenden Fluid sowie ein Analysegerät mit einer derartigen Probenahme-Einrichtung, mit dem mindestens ein chemischer und/oder physikalischer Parameter der Probe unter den bereits im Fluid herrschenden Bedingungen bestimmbar ist.

Die Probenahme aus druckbeaufschlagten und/oder flüchtige Bestandteile enthaltenden Fluiden, also Flüssigkeiten oder Gasen, wird in verschiedenen Bereichen durchgeführt. Zu diesen zählen beispielsweise die chemische, biochemische, pharmazeutische und insbesondere die Lebensmittelindustrie. In der Lebensmittelindustrie werden zum Beispiel die chemischen und/oder physikalischen Parameter von gashaltigen Getränken wie Bier oder Limonaden bestimmt. Gerade die Messung solcher Parameter in Bier ist schwierig, da dieses bereits bei geringem und/oder kurzzeitigem Druckverlust stark schäumt. Als Parameter wird beispielsweise der Gehalt an gelösten Gasen, wie zum Beispiel Sauerstoff, Ozon, Stickstoff, Kohlendioxid und Kohlenmonoxid, oder im Falle von Bier der CO₂-Gehalt und/oder der Sauerstoffgehalt von CO₂-haltigen Getränken bestimmt.

Bislang werden solche Bestimmung vorwiegend an Proben ausgeführt, welche aus einer Produktionsanlage entnommen und dann wenigstens teilweise unter kontrollierten Bedingungen entspannt wurden, so dass sich ein Gleichgewicht zwischen dem gelösten und dem aus dem Fluid ausgetretenen Gas einstellt. Mittels einer Messung des Gleichgewichtsdrucks und der Temperatur kann dann anhand bekannter physikalischer Gesetzmässigkeiten auf den Gasgehalt im Fluid rückgeschlossen werden. Neben dem Gasgehalt können mit geeigneten zusätzlichen Sensoren auch weitere Parameter der Probe ermittelt werden. Zu diesen zählen beispielsweise die Trübung, die Farbe und der Gehalt weiterer Bestandteile. Die Messung von gelöstem Gas mittels derartiger Expansionsverfahren und dazu geeignete Analysegeräte werden unter anderem in der DE 102 13 076 A1 und der DE 44 00 385 A1 offenbart.

Ein verwandter Ansatz wird in der EP 0 118 964 A1 verfolgt. Hier wird die Probe in eine an die Produktionsanlage angeschlossene Kammer eingebracht und durch einen Kolben in eine Messkammer gepresst, in der sich dann wie bereits zuvor beschrieben ein Gleichgewichtsdruck zwischen gelöstem und freien Gas einstellen kann.

Eine weitere Möglichkeit stellt eine mit einer selektiv gasdurchlässigen Membran vom Fluid abgetrennte Messkammer dar. Das gelöste Gas kann durch die Membran in die Kammer diffundieren und dort mittels bekannter Sensoren vermessen werden.

Diese Methoden und Geräte ermöglichen eine indirekte Messung des Gasgehalts. Eine repräsentative Probenahme aus einem im Wesentlichen gasgesättigten, unter Druck stehenden Fluid zur Messung eines flüchtigen Bestandteils ist ohne eine Verfälschung oder Veränderung der Probe durch Ausgasen nicht möglich. Zudem bestehen die Geräte teilweise aus mehreren Kammern und Messkammern und sind daher nur umständlich zu reinigen. Das einfache Reinigen ist jedoch insbesondere beim Einsatz in der Lebensmittelindustrie entscheidend.

Geräte zur sogenannten "near-line"- oder "at-line"-Messung von gelösten Gasen werden unter der Bezeichnung InTap 4000 und InTap 4004 von der Firma Mettler-Toledo vertrieben. Diese bestehen aus einem Transmitter, einem Sensor und einer Messzelle, welche über ein Ventil mit der Produktionsanlage verbunden werden kann, so dass eine Messung im Durchfluss durchgeführt werden kann. Dem Auslass ist eine feste Blende nachgeschaltet, welche den Durchfluss des Fluids durch die Messzelle reguliert, damit das Fluid nicht bereits in der Messzelle entspannt wird. Das Fluid wird nach Durchtritt durch die Blende, also nach der Messung, entspannt.

Diese Geräte ermöglichen die Messung bestimmter Parameter unter den in der Produktionsanlage herrschenden Bedingungen, allerdings sind sie ebenfalls komplex aufgebaut und müssen zum Reinigen umständlich zerlegt werden. Weiterhin hat sich gezeigt, dass sich Ablagerungen aus dem Fluid auf der Blende absetzen und diese verstopfen, wodurch Messungen verfälscht werden.

Somit liegt die Aufgabe der Erfindung in der Entwicklung einer verbesserten Probenahme-Einrichtung und eines Analysegeräts mit einer derartigen Probenahme-Einrichtung, welche kompakt gestaltet, einfach zu handhaben und leicht zu reinigen ist, sowie eines Verfahrens zur Probenahme.

Eine erfindungsgemässe Probenahme-Einrichtung zur Probenahme von einem druckbeaufschlagten und/oder flüchtige Bestandteile enthaltenden Fluid weist ein Probenahme-Gehäuse, einen Einlass, einen Auslass, eine Messzelle und eine Ventileinheit mit einem Ventil auf. Das Ventil verbindet in einer ersten Stellung den Einlass über die Messzelle mit dem Auslass und in einer zweiten Stellung den Einlass direkt mit dem Auslass, wobei in der zweiten Stellung die Messzelle abgetrennt wird. Die Ventileinheit weist mindestens eine einstellbare Blende auf, mit der der Durchfluss des Fluids durch die Probenahme-Einrichtung geregelt wird.

Die Blende ist in der Ventileinheit angeordnet, wodurch sich eine besonders kompakte Probenahme-Einrichtung realisieren lässt, mit der eine repräsentative Probenahme auch aus einem gasgesättigten, unter Druck stehendem Fluid möglich ist, ohne dass die Probe durch Ausgasen vor der Messung verfälscht wird. Die einstellbare Blende ermöglicht es, die Probe mit einem vorgegebenen Durchfluss durch die Messzelle zu leiten. Die Blende ist vorzugsweise zwischen Messzelle und Auslass angeordnet. Selbstverständlich kann diese eine Blende oder eine weitere Blende auch zwischen der Messzelle und dem Einlass angeordnet sein.

Mit dem Ventil kann in der zweiten Stellung die Messzelle von Einlass und Auslass abgetrennt werden. Dadurch ergibt sich die Möglichkeit, die Messzelle im Labor vorzukonditionieren, also zum Beispiel auf einen bestimmten Zielwertbereich einzustellen. In der zweiten Stellung kann das Ventil und damit der Einlass und der Auslass mit dem zu untersuchenden Fluid oder einer Reinigungslösung gespült werden, ohne dass die Konditionierung der Messzelle verändert wird. Erst wenn das Ventil in die erste Stellung gebracht wird, wird das zu untersuchende Fluid durch die Messzelle geleitet. Die Ventileinheit ist im Wesentlichen totraumfrei ausgestaltet, so dass eine Kontamination der Messzelle sowie das versehentliche Einbringen von Luftblasen in diese stark reduziert werden.

Die Probenahme-Einrichtung kann sowohl zur Entnahme von Proben aus Flüssigkeiten als auch aus Gasen verwendet werden, welche unter dem Begriff "Fluid" zusammengefasst sind.

Der Einlass und/oder der Auslass können beispielsweise als Schlauchadapter ausgestaltet sein und über einen Schlauch oder eine Rohrleitung an ein mit einem Fluid gefüllten Behältnis oder ein geeignetes Abfallbehältnis angeschlossen werden.

Das Ventil weist einen im Wesentlichen zylinderförmigen Ventilkörper auf, welcher in einem Ventilsitz gelagert ist. Der Ventilkörper kann mittels eines ersten Stellelements im Ventilsitz um seine Längsachse gedreht werden. Das erste Stellelement kann sowohl vom Benutzer manuell als auch durch eine geeignete Steuerung automatisch betätigt werden.

Der Ventilkörper weist eine erste und eine zweite Bohrung zur Verbindung des Einlass oder des Auslass mit der Messzelle und eine Kurzschlussleitung zur direkten Verbindung von Einlass und Auslass auf. Die Kurzschlussleitung und die Bohrungen sind so im Ventilkörper angeordnet, dass sie nicht miteinander kommunizieren können. Vorzugsweise sind die Kurzschlussleitung oder die Bohrungen azentrisch zur Drehachse des Ventilkörpers ausgebildet. Die Kurzschlussleitung kann parallel und die erste und/oder zweite Bohrung kann so angeordnet sein, dass sie die Drehachse des Ventilkörpers schneiden. In einer bevorzugten Ausgestaltung ist die erste und/oder zweite Bohrung orthogonal zur Drehachse des Ventilkörpers ausgebildet. Die Längsachsen der beiden Bohrungen können zudem parallel oder unter einem Winkel zueinander angeordnet sein. Selbstverständlich können die Bohrungen auch in einem anderen Winkel zur Drehachse des Ventilkörpers angeordnet sein. Aufgrund dieser Ausgestaltung kann eine sehr kompakte Ventileinheit geschaffen werden, welche besonders einfach zu handhaben ist.

In einer weiteren Ausführungsform sind im Probenahme-Gehäuse der Ventilkörper, die Blende, der Einlass und der Auslass angeordnet. Zudem sind im Probenahme-Gehäuse die Messzelle, der Ventilsitz sowie eine erste und eine zweite mit der Messzelle verbundene Verbindungsleitung ausgebildet. Die erste und zweite Verbindungsleitung sind vorzugsweise zumindest an einem Ende mit einem entfernbaren Verschlussmittel verschlossen, so dass diese einfach gespült oder mechanisch gereinigt werden können. Vorzugsweise kann die Probenahme-Einrichtung zur Reinigung weitestgehend demontiert werden.

In einer bevorzugten Ausführungsform kann die erste und/oder zweite Bohrung im Ventilkörper einen kleineren Durchmesser haben als die mit dieser Bohrung verbindbare erste oder zweite Verbindungsleitung oder der Einlass, so dass bereits die Bohrung als zusätzliche feste Blende wirken kann.

Die einstellbare Blende kann kontinuierlich oder in vorgegebenen Schritten eingestellt werden, so dass der Durchfluss durch die Messzelle an die im Fluid herrschenden Bedingungen angepasst werden kann.

Eine Blende wird allgemein als Mittel zur Querschnittsbegrenzung verstanden und kann unterschiedlich ausgestaltet sein. Der Einsatz einer einstellbaren Blende ist besonders vorteilhaft, wenn die Probenahme-Einrichtung an verschiedenen Stellen in einer Produktionsanlage eingesetzt werden soll, an denen unterschiedliche Bedingungen herrschen, oder in verschiedenen Produktionsanlagen. Eine einstellbare oder variable Blende im Sinne dieser Erfindung ist ein Mittel zur Querschnittsbegrenzung, welches die Einstellung verschiedener Querschnitte, genauer Grössen des Querschnitts, erlaubt.

Eine Ausführungsform der einstellbaren Blende stellt ein Schieber mit einer Aussparung dar. Der Schieber ist zumindest teilweise in der Ventileinheit, insbesondere im Ventilkörper angeordnet, so dass dieser unter Veränderung der Blende entlang der Drehachse der Ventileinheit verschoben werden kann. Der Überlappungsbereich zwischen der Aussparung und der mit der Aussparung korrespondierenden ersten und/oder zweiten Bohrung kann verändert und so die Blende eingestellt werden. Durch die Bewegung des Schiebers wird die Aussparung relativ zur Bohrung verschoben. Form und Grösse der Aussparung entspricht im Wesentlichen der korrespondierenden Bohrung im Ventilkörper. In Abhängigkeit der Position des Schiebers im Ventilkörper, kann die Blende geöffnet oder geschlossen werden. Zur axialen Verschiebung weist der Schieber ein zweites Stellelement auf, dessen Position und darüber die Blende fixierbar sind.

Die einstellbare Blende, insbesondere in der Ausgestaltung als Schieber, kann mit einem elastischen Element zusammenwirken, welches im Ventilkörper angeordnet ist und am im Ventilkörper befindlichen Ende des Schiebers anliegt. Bei einer axialen Verschiebung des Schiebers in den Ventilkörper hinein wird das elastische Element komprimiert und zugleich die Blende geöffnet, bis diese maximal geöffnet ist. Sobald die Krafteinwirkung auf das elastische Element nachlässt, entspannt sich dieses und wirkt gegen den Schieber, welcher durch die Rückstellkraft des elastischen Elements in seine voreingestellte Position zurückgestellt wird. Das Zusammenwirken zwischen Schieber und elastischem Element ermöglicht ein kurzfristiges Öffnen der Blende ohne Verlust der Voreinstellung. Bei vorzugsweise maximal geöffneter Blende können Verunreinigungen, wie Sedimente und Partikel, die sich an der Blende und in der Messzelle abgelagert haben, sowie Blasen in der Messzelle, durch das hindurchströmende Fluid aus der Probenahme-Einrichtung hinaus gespült und so einfach entfernt werden. Die Funktionalität der Blende und der Messzelle kann gewährleistet und ein Verstopfen der Blende verhindert werden.

In einer weiteren Ausgestaltung bilden der Ventilkörper und die einstellbare Blende eine integrierte Ventileinheit, wobei die Blendeneinstellung in Abhängigkeit des Schwenkwinkels des Ventilkörpers erzielbar ist. Es wird der Umstand ausgenutzt, dass beim Verschwenken des Ventilkörpers um seine Mittellängsachse und relativ zum Probenahme-Gehäuse zwischen der ersten und zweiten Stellung eine teilweise Überdeckung mindestens eines Querschnitts einer Bohrung durch die Wand des im Probenahme-Gehäuse ausgebildeten Ventilsitzes erfolgt.

Die Blende kann somit bereitgestellt werden, indem zumindest eine Mittellängsachse einer Drehführung im Ventilkörper unter einem vorgebbaren Winkel zu den Mittellängsachsen der im Ventilsitz ausgebildeten und an die Bohrungen anschliessenden Öffnungen des Einlasses, des Auslasses oder der Verbindungsleitungen zur Messzelle unterstellt wird und so eine Querschnittsbegrenzung erzeugt wird.

Die integrierte Ventileinheit ermöglicht die Bereitstellung einer besonders kompakten und einfach zu verwendenden Probenahme-Einrichtung, da auf eine separate Blende verzichtet werden kann.

In einer bevorzugten Ausführungsform weisen die Längsachsen der ersten und zweiten Bohrung im Ventilkörper zueinander einen Winkel auf, so dass bei Einstellung der ersten Stellung der Ventileinheit nur die zweite Bohrung zwischen dem zweiten Verbindungskanal und dem Auslass eine Querschnittsbegrenzung bewirkt, während die erste Bohrung einen maximalen Durchfluss zwischen dem Einlass und dem ersten Verbindungskanal gewährleistet.

Die Ventileinheit kann auch als weitere feste Blende wirken, wenn die erste und/oder die zweite Bohrung im Ventilkörper mit einem geringeren Durchmesser als die daran anschliessenden Öffnungen ausgestaltet ist.

Zur besonders einfachen Handhabung der Probenahme-Einrichtung weist diese einen ersten und zweiten Anschlag für das erste Stellelement auf, welche den Drehwinkel der Ventileinheit und damit des Ventilkörpers begrenzen.

Die Blende der integrierten Ventileinheit kann eingestellt werden, indem entweder ein Ventilkörper mit unterschiedlich grosser erster und/oder zweiter Bohrung verwendet wird oder indem deren Schwenkwinkel variiert wird.

In einer weiteren Ausführungsform weist die Ventileinheit ein zweites Stellelement zur Einstellung und/oder Fixierung der einstellbaren Blende auf. Mit dem zweiten Stellelement kann die Lage des Ventilkörpers zum ersten Stellelement fixiert werden. Beispielsweise kann die integrierte Ventileinheit zwei getrennte Achsen aufweisen, wobei das erste und das zweite Stellelement auf verschiedene Achsen der Ventileinheit einwirken. Weiterhin kann die Blendeneinstellung durch Veränderungen des Abstands zwischen den beiden Anschlägen eingestellt werden. Ebenso können Anschläge mit festem Abstand zueinander um die Mittellängsachse des Ventilkörpers drehbar ausgestaltet sein und als zweites Stellelement wirken, dessen Lage fixiert werden kann.

Die Grösse der Grundfläche wird unter anderem durch einen mit der Messzelle zusammenwirkenden Sensor bestimmt. Damit der Durchfluss und die Durchflussgeschwindigkeit der Probe in der Messzelle und der ersten und zweiten Verbindungsleitung im Wesentlichen gleich ist, wenn das Ventil in der ersten Stellung steht, sollte der Strömungsquerschnitt der Messzelle im Wesentlichen dem der ersten und zweiten Verbindungsleitung entsprechen. Dieses wird erreicht, indem die Messzelle einen im Vergleich zu den Verbindungsleitungen vergrösserten Durchmesser aufweist, anders ausgedrückt, die Messzelle hat eine vergrösserte Grundfläche. Damit trotz vergrösserter Grundfläche der Durchfluss aufrechterhalten werden kann, weist die Messzelle zudem einen geringeren Querschnitt als die daran anschliessenden Verbindungsleitungen auf.

Die Messzelle kann mit einem Verschlusselement, dem Sensor und/oder einem geeigneten Messfenster verschlossen werden, wodurch diese zur Reinigung leicht zugänglich ist.

Mindestens eine Wand der Messzelle kann eine nach innen ausgeprägte Kontur aufweisen, welche durch die Wand, ein Wandelement oder das Verschlusselement ausgebildet wird. Mit dieser Kontur kann die Geometrie der Messzelle angepasst werden, so dass die Bedingungen an den Strömungsquerschnitt erfüllt werden können und die Messzelle einen im Wesentlichen gleichen oder kleineren Strömungsquerschnitt als die mit der Messzelle verbundenen Verbindungsleitungen aufweist. Die Kontur kann auch dazu dienen, die Geometrie der Messzelle und somit deren Strömungsquerschnitt an eine in die Messzelle ragende Kontur des Sensor anzupassen. Die Kontur in der Wand der Messzelle kann unterschiedlich ausgeprägt sein.

Besonders bevorzugt ist eine im Wesentlichen transparente Ausgestaltung der Probenahme-Einrichtung, so dass beispielweise Verunreinigungen der Einrichtung optisch und/oder visuell zu erkennen sind. Diese Erkennung kann sowohl per Auge durch den Benutzer und/oder durch eine geeignete optische Erkennungseinheit erfolgen.

Eine erfindungsgemässe Probenahme-Einrichtung kann insbesondere mit einem Analysegerät zur Bestimmung eines chemischen und/oder physikalischen Parameters einer Probe eines druckbeaufschlagten und/oder flüchtige Bestandteile enthaltenden Fluids eingesetzt werden. Das Analysegerät kann ein Analyse-Gehäuse aufweisen, in dem ein Sensor, der mit der Messzelle der Probenahme-Einrichtung zusammenwirkt, und ein Transmitter angeordnet sind. Der Transmitter kann als Teil einer Prozessoreinheit ausgebildet sein.

Vorzugsweise ist die Probenahme-Einrichtung lösbar mit dem Analysen-Gehäuse verbunden. Die Probenahme-Einrichtung kann so austauschbar im Analysegerät angeordnet sein, so dass beispielsweise mit demselben Analysegerät aufeinanderfolgend unterschiedliche Fluide vermessen werden können. Weiterhin können eine oder mehrere Probenahme-Einrichtungen und/oder Analyse-Geräte in eine Prozessanlage integriert werden. Auf diese Weise kann beispielsweise eine Probenahme-Einrichtung fest in eine Anlage integriert werden und im Bedarfsfall können Messungen mit einem daran anschliessbaren Analyse-Gehäuse durchgeführt werden.

Das Analysegerät zeichnet sich aufgrund der möglichen Vorkonditionierung der Probenahme-Einrichtung auf einen Zielwertbereich durch besonders schnelle Ansprechzeiten auf, was bei der Messung von niedrigen Konzentrationen flüchtiger Bestandteile des Fluids besonders vorteilhaft ist. Einer vorkonditionierbare Probenahme-Einrichtung weist vorzugsweise eine verschlossene Messzelle auf. Die Messzelle kann beispielsweise durch ein Verschlusselement, ein Messfenster oder eine Teil des Sensors verschlossen sein.

Mehrere auf unterschiedliche Fluide oder verschiedene Zielwertbereiche vorkonditionierte Probenahme-Einrichtungen können daher für die anschliessende Verwendung vorbereitet und bereitgestellt werden. Neben unterschiedlichen Zielwertbereichen, können auch trockene Probenahme-Einrichtungen oder bereits mit dem Fluid beschickte Probennahme-Einrichtungen bereitgestellt werden, so dass mit einem Analysengerät durch Austausch der Probenahme-Einrichtung verschiedene Fluide aufeinanderfolgend vermessen werden können. Auf diese Weise wird beispielsweise eine Verfälschung der Messergebnisse durch Rückstände zuvor vermessener Fluide vermieden.

Ein erfindungsgemässes Analysegerät kann sowohl für den mobilen als auch für den stationären Einsatz verwendet werden. Für einen mobilen Einsatz ist es vorteilhaft, wenn das Analysegerät eine netzunabhängige Stromquelle aufweist und tragbar ausgestaltet ist.

Als Sensor für ein erfindungsgemässes Analysegerät eignen sich beispielsweise optische, amperometrische, potentiometrische, elektrochemische oder optoelektrische Sensoren, welche vorzugsweise austauschbar im Analyse-Gehäuse und/oder in der Probenahme-Einrichtung angeordnet sind.

Neben Durchfluss-Messungen können in der Messzelle auch Messungen an stationären Proben durchgeführt werden, welche im Durchfluss, also in der ersten Stellung des Ventils, in die Messzelle eingebracht werden und anschliessend durch Umschalten des Ventils in die zweite Stellung in der Messzelle eingeschlossen werden.

Zur Probenahme befindet sich das Ventil zunächst in der zweiten Stellung und der Einlass der Probenahme-Einrichtung wird mit einem das zu untersuchende Fluid enthaltende Behältnis verbunden. Das Fluid kann nun durch den Einlass und die Kurzschlussleitung direkt zum Auslass strömen, wodurch sowohl die Leitung zwischen Einlass und Behältnis als auch der Einlass, die Kurzschlussleitung und der Auslass mit dem Fluid gespült werden. Unter anderem wird durch das Spülen die Leitung zum Behältnis unabhängig von der Messzelle entgast, ohne dass beispielsweise die Vorkonditionierung der Messzelle beeinflusst wird. Die Blende kann mit dem zweiten Stellelement eingestellt werden. Anschliessend wird die Ventileinheit mittels des ersten Stellelements in die erste Stellung gedreht. Je nach Ausgestaltung wird bereits während der Drehbewehung die mindestens eine Blende kurzfristig maximal geöffnet. Wenn sich das Ventil in der ersten Stellung befindet, strömt das Fluid vom Einlass durch die Messzelle zum Auslass und durchströmt dabei die beiden Bohrungen im Ventilkörper. Aufgrund der voreingestellten Blende, kann nun in der Messzelle das Fluid mit definiertem Durchfluss unter Aufrechterhaltung der Bedingungen im Fluid-Behältnis, zum Beispiel des Sättigungsdrucks, mit dem Sensor des Analysengeräts vermessen werden.

Besonders vorteilhaft an der Ausgestaltung der Probenahme-Einrichtung ist, dass sie einfach zu reinigen ist, auch mit aggressiven kommerziellen Reinigungsmitteln und Methoden, und eine im Wesentlichen totraumfreie Ventileinheit aufweist. Die Ventileinheit bietet aufgrund ihrer Spülfunktion zudem die Möglichkeit Ablagerungen, Blasen und ähnliche störende Partikel im Betrieb einfach aus der Probenahme-Einrichtung zu entfernen. Dies kann beispielsweise vor jeder Messung erfolgen. Eine erfindungsgemässe Probenahme-Einrichtung kann auch für Probenahmen unter hygienischen Bedingungen eingesetzt werden.

Selbstverständlich kann ein erfindungsgemässes Ventil mit einstellbarer Blende auch in anderen Vorrichtungen und Geräten eingesetzt werden.

Verschiedene Ausführungsformen der erfindungsgemässen Probenahme-Einrichtung sowie des erfindungsgemässen Analysegeräts werden anhand der folgenden Figuren näher beschrieben. Die Figuren zeigen:
- Fig. 1: Eine stark vereinfachte Darstellung eines Analysegeräts mit einer austauschbaren Probenahme-Einrichtung;
- Fig. 2: eine vereinfachte Darstellung einer Probenahme-Einrichtung mit einer Ventileinheit mit einstellbarer Blende im Schnitt, wobei das Ventil in einer ersten Stellung ist;
- Fig. 3: eine vereinfachte Darstellung der Probenahme-Einrichtung aus Figur 2 im Schnitt, wobei das Ventil in einer zweiten Stellung ist;
- Fig. 4: eine schematische Darstellung des Schiebers in einer ersten Position im Schnitt;
- Fig. 5: eine schematische Darstellung des Schiebers aus Figur 4 in einer zweiten Position im Schnitt;
- Fig. 6: eine Aufsicht auf eine stark vereinfachte Messzelle;
- Fig. 7: ein Schnitt durch die Messzelle aus Figur 6,
- Fig. 8: eine Probenahme-Einrichtung mit einer integrierten Ventileinheit im Schnitt, wobei sich das Ventil in der zweiten Stellung befindet;
- Fig. 9: eine Ansicht der Probenahme-Einrichtung aus Figur 8, wobei ein Teil der Einrichtung im Schnitt entlang der Ebene D-D gezeigt ist;
- Fig. 10: eine Ansicht der Probenahme-Einrichtung aus Figur 8, wobei ein Teil der Einrichtung im Schnitt entlang der Ebene C-C gezeigt ist;
- Fig. 11: eine Aufsicht auf die Probenahme-Einrichtung aus Figur 8 entlang der Achse D-D;
- Fig. 12: ein Schnitt durch die integrierte Ventileinheit aus Figur 8 durch den Auslass parallel zur Achse D-D, wobei sich das Ventil in einer ersten Stellung befindet;
- Fig. 13: ein Schnitt durch die integrierte Ventileinheit aus Figur 8 durch den Auslass parallel zur Achse D-D, wobei sich das Ventil zwischen der ersten und zweiten Stellung befindet;
- Fig. 14: ein Schnitt durch die integrierte Ventileinheit aus Figur 8 durch den Auslass parallel zur Achse D-D, wobei sich das Ventil in einer zweiten Stellung befindet;
- Fig. 15: eine Teildarstellung der Aufsicht aus Figur 12, wobei sich das Ventil in der ersten Stellung befindet;
- Fig. 16: eine Teildarstellung der Aufsicht aus Figur 14, wobei sich das Ventil in der zweiten Stellung befindet;
- Fig. 17: eine graphische Darstellung der Blende in Relation zum Schwenkwinkel der Ventileinheit.

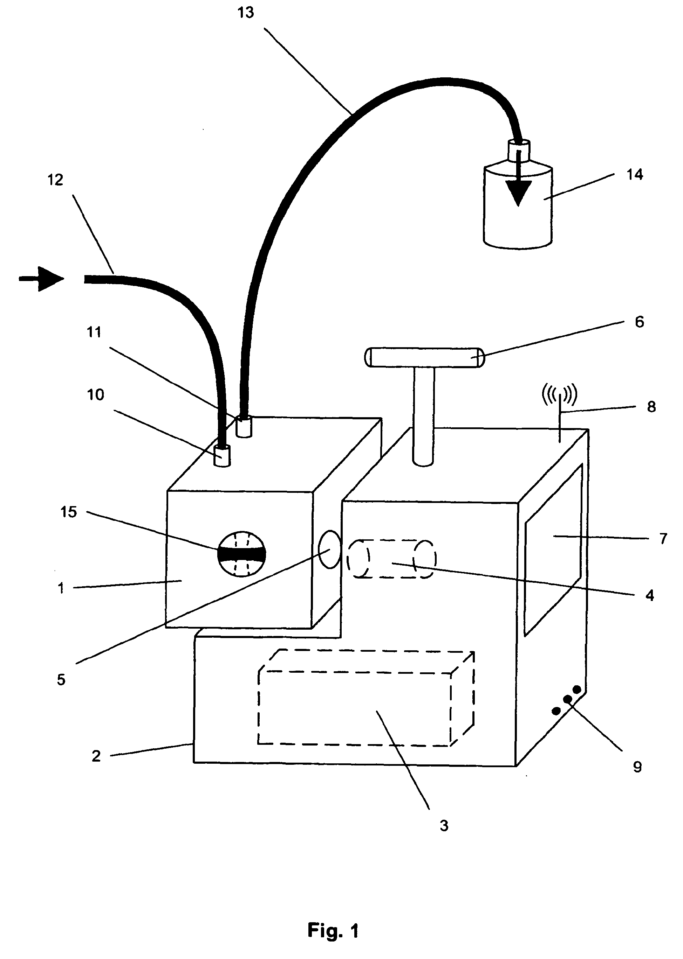

Figur 1 zeigt eine stark vereinfachte Darstellung eines erfindungsgemässen Analysegeräts mit einer Probenahme-Einrichtung 1. Das Analysegerät hat ein Analyse-Gehäuse 2, mit dem die Probenahme-Einrichtung 1 lösbar verbunden werden kann. Die Probenahme-Einrichtung 1 und das Analyse-Gehäuse 2 können somit vollständig voneinander getrennt werden. Die Probenahme-Einrichtung 1 kann vom Analysegerät abgekoppelt und ausgetauscht werden, zum Beispiel gegen eine andere, eine vorkonditionierte oder eine gereinigte Einrichtung. Ebenso kann ein Analyse-Gehäuse 2 an unterschiedliche Probenahme-Einrichtungen 1 angeschlossen werden, wenn diese beispielsweise fest in einer Prozessanlage eingebaut sind. Die Probenahme-Einrichtung 1 und/oder das Analyse-Gehäuse 2 können über eine eindeutige Kennzeichnung zur Identifikation verfügen.

Im Analyse-Gehäuse 2 sind, wie hier stark schematisiert gezeigt, ein Transmitter 3, welcher einen Teil einer ebenfalls im Analyse-Gehäuse 2 angeordneten Prozessoreinheit bilden kann, und ein austauschbarer Sensor 4 angeordnet. Der Sensor 4 ist so im Analyse-Gehäuse 2 angeordnet, dass er mit einer in der Probenahme-Einrichtung 1 angeordneten Messzelle, welche hier durch eine Schnittstelle 5 in der Probenahme-Einrichtung 1 angedeutet ist, zusammenwirken kann, so dass mit dem Sensor eine Probe in der Messzelle vermessen werden kann.

Der Sensor 4 kann beispielsweise ein optischer, ein amperometrischer, ein potentiometrischer, ein elektro-optischer oder ein elektrochemischer Sensor sein. Mit dem Analysengerät können sowohl stationäre, in der Messzelle eingeschlossene Proben als auch Proben im Durchfluss in der Messzelle vermessen werden.

Das Analysegerät ist hier als tragbares Gerät ausgestaltet und hat zum Transport einen Griff 6. Weiterhin weist das Analysengerät eine Anzeige 7 auf. Je nach Ausgestaltung dient die Anzeige 7 zur Ausgabe der Messwerte und/oder zur Eingabe von Messparametern, Steuerbefehlen und Probeninformationen. Selbstverständlich kann das Analysegerät auch ferngesteuert werden, indem beispielsweise Daten drahtgebunden und/oder drahtungebunden zwischen einer hier nicht gezeigten Einheit, beispielsweise einem Computer, und dem Analysengerät ausgetauscht werden. Dazu weist das Analysegerät eine geeignete Sender-Empfänger-Einheit 8 und/oder geeignete Anschlüsse 9 auf. Derartige Einheiten 8 und Anschlüsse 9 sind hinlänglich bekannt und werden hier nicht näher erläutert. Die Einheiten 8 und Anschlüsse 9 können auch zum Daten- und/oder Messdaten-Transfer verwendet werden.

In einer weiteren hier nicht gezeigten Ausgestaltung ist der Sensor im Wesentlichen in der Probenahme-Einrichtung und/oder dem Analyse-Gehäuse angeordnet.

Die Probenahme-Einrichtung 1 weist neben der Schnittstelle 5 zur Messzelle einen Einlass 10 und einen Auslass 11 auf. Der Einlass 10 kann über eine Leitung 12, beispielsweise ein Schlauch oder eine Rohrverbindung, mit einem Behältnis (hier nicht gezeigt), wie zum Beispiel einer Rohrleitung, einer Prozessanlage oder einem Behälter, verbunden werden, in dem sich das zu untersuchende Fluid befindet. Der Auslass 11 kann wie hier beispielhaft gezeigt über eine weitere Leitung 13 mit einem geeigneten Abfallbehältnis 14 verbunden werden.

Weiterhin ist in Figur 1 ein erstes Stellelement 15 zu erkennen, mit dem eine in der Probenahme-Einrichtung 1 angeordnete Ventileinheit zwischen mindestens zwei Stellungen bewegt werden kann.

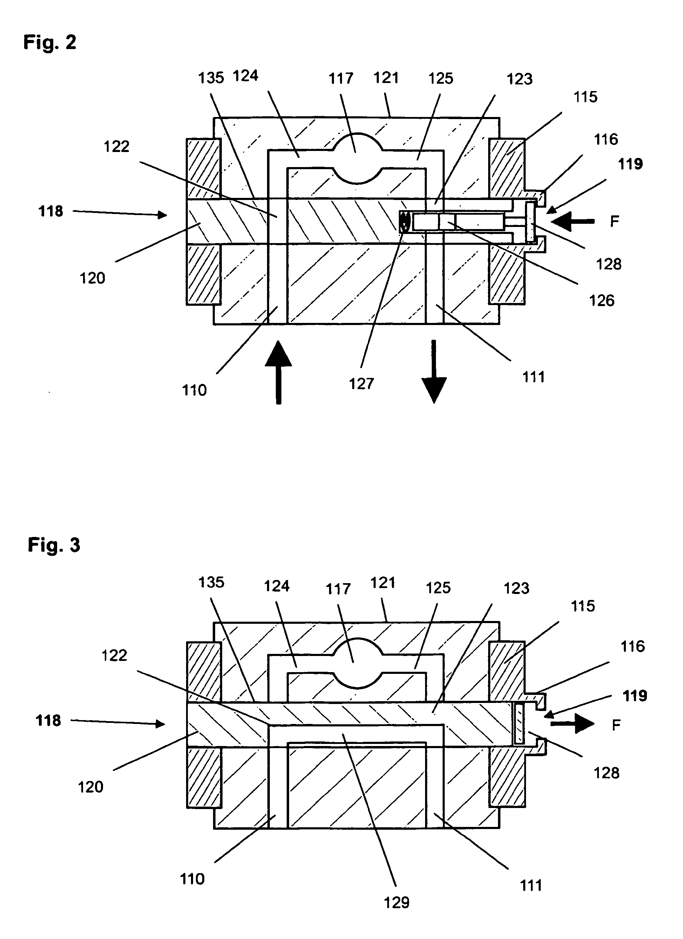

Verschiedene Ausgestaltungen und Details einer erfindungsgemässen Probenahme-Einrichtung 1 werden anhand der Figuren 2 bis 17 näher erläutert.

Figur 2 zeigt schematisch eine erste Ausgestaltung der Probenahme-Einrichtung im Schnitt. Die Probenahme-Einrichtung hat einen Einlass 110, einen Auslass 111, eine Messzelle 117 und eine Ventileinheit 118 mit einer Blende, welche in einem Schieber 119 ausgebildet ist.

Mit "Einlass" und "Auslass" werden nicht nur die nach aussen weisenden Öffnungen der Probenahme-Einrichtung, sondern auch die direkt an diese Öffnungen anschliessenden Leitungen bezeichnet.

Die Ventileinheit 118 besteht im Wesentlichen aus einem zylinderförmigen Ventilkörper 120, welcher zumindest an einem Ende oder wie hier gezeigt an beiden Enden mit einem ersten Stellelement 115 verbunden ist. Der Ventilkörper 120 ist um seine Längsachse drehbar in einen Ventilsitz 135 gelagert, welcher im Probenahme-Gehäuse 121 der Probenahme-Einrichtung ausgebildet ist. Durch Betätigung des Stellelements 115 kann die Ventileinheit 118 von der in Figur 2 gezeigten ersten Stellung in die in Figur 3 gezeigte zweite Stellung bewegt werden.

In der in Figur 2 gezeigten ersten Stellung der Ventileinheit 118 sind die im Ventilkörper 120 ausgebildete erste und zweite Bohrung 122, 123 zu erkennen. In dieser Stellung verbindet die erste Bohrung 122 den Einlass 110 über eine erste Verbindungsleitung 124 mit der Messzelle 117 und die zweite Bohrung 123 die Messzelle über eine zweite Verbindungsleitung 125 mit dem Auslass 111, so dass ein Fluid durch die Messzelle 117 hindurchströmen kann.

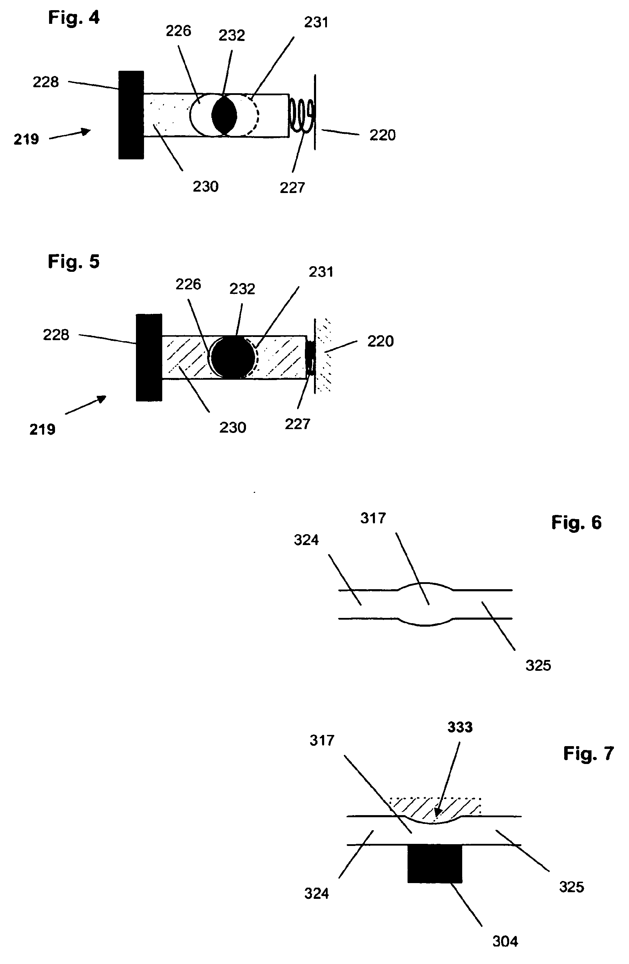

Der Schieber 119 weist eine Aussparung 126 auf, welche durch eine Bewegung des Schiebers 119 mittels eines zweiten Stellelements 128 entlang der Längsachse des Ventilkörpers 120 den Querschnitt der Bohrung 123 mehr oder weniger stark begrenzt. Der durch die Aussparung 126 begrenzte Querschnitt stellt die Blende dar. Der Durchfluss des Fluids durch die Probenahme-Einrichtung kann über die Einschubtiefe des Schiebers 119 in den Ventilkörper 120 verändert werden (s. a. Figuren 4 und 5). Die Einstellung der Blende kann mit dem zweiten Stellelements 128 eingestellt und fixiert werden. In den Figuren 2 und 3 ist nur ein Schieber 119 gezeigt, selbstverständlich kann dieser auch am anderen Ende des Ventilkörpers 120 angeordnet sein oder die Probenahme-Einrichtung kann zwei Schieber aufweisen.

Im Inneren des Ventilkörpers 120 ist ferner ein elastisches Element 127 angeordnet, welches am im Ventilkörper 120 befindlichen Ende des Schiebers 119 anliegt. Eine Krafteinwirkung F, z. B. Druck, auf das zweite Stellelement 128 am anderen Ende des Schiebers 119 führt zur Komprimierung des elastischen Elements 127 und bewirkt eine Öffnung der Blende. Sobald der Druck bzw. die Krafteinwirkung auf das elastische Element 127 nachlässt, wird der Schieber 119 durch die Rückstellkraft des elastischen Elements 127 wieder in seine vorherige Position verschoben und so die zuvor eingestellte Blendenöffnung wieder eingestellt. Auf diese Weise kann der Durchfluss durch die Probenahme-Einrichtung kurzfristig maximiert werden, so dass beispielsweise Ablagerungen auf der Blende und/oder Blasen in der Messzelle schnell und einfach entfernt werden können. Die maximale Verschiebestrecke des Schiebers 119 entlang der Längsachse des Ventilkörpers 120 wird einerseits durch die Wand der Aussparung im Ventilkörper 120 und andererseits durch einen Anschlag 116 begrenzt.

Die Ventileinheit 118 in der zweiten Stellung ist in Figur 3 zeigt. In dieser Ventilstellung sind Einlass 110 und Auslass 111 direkt über eine Kurzschlussleitung 129 miteinander verbunden, welche parallel zur Längsachse des Ventilkörpers 120 in demselben ausgebildet ist. Die Messzelle 117 ist vom Einlass 110 und Auslass 111 abgetrennt.

Die Kurzschlussleitung 129 und die Bohrungen 122, 123 sind so im Ventilkörper 120 ausgebildet, dass diese nicht miteinander kommunizieren. Dieses kann dadurch erreicht werden, dass die Bohrungen 122, 123 oder die Kurzschlussleitung 129 azentrisch zur Längsachse des Ventilkörpers 120 ausgebildet sind. Die Bohrungen 122, 123 können entweder parallel oder unter einem Winkel zueinander ausgerichtet sein. Es ist auch denkbar, dass mindestens eine der Bohrungen 122, 123 in sich gewinkelt ausgestaltet ist.

Ein als Blende ausgestalteter Schieber 219 und dessen Funktion ist schematisch in den Figuren 4 und 5 gezeigt. Der Schieber 219 besteht aus einem zweiten Stellelement 228, welches mit einem Einsatz 230 verbunden ist. Im Einsatz 230 ist eine im Wesentlichen kreisförmige Aussparung 226 ausgebildet. Der Querschnitt der Aussparung 226 entspricht im Wesentlichen dem Querschnitt der Bohrung 125.

In Figur 4 ist der Schieber 219 teilweise nach aussen aus einem Ventilkörper 220 herausgezogen dargestellt. Der Ventilkörper 220 ist nur angedeutet. In dieser Position ist die Aussparung 226 gegen den Querschnitt der Bohrung 223 verschoben und begrenzt oder verkleinert diesen, so dass ein Fluid nur durch den in Figur 4 schwarz dargestellten Querschnitt 232 hindurchströmen kann, welcher kleiner ist als der Querschnitt der Bohrung 223.

In Figur 5 ist der Schieber 219 fast vollständig in den Ventilkörper 220 hineingeschoben, so dass sich die Aussparung 226 und Querschnitt der Bohrung 223 fast vollständig überlappen und das Fluid durch den im Vergleich zu Figur 4 vergrösserten Querschnitt 232 strömen kann. Die Blende ist fast vollständig geöffnet.

Die Figuren 6 und 7 zeigen eine Messzelle 317 für eine erfindungsgemässe Probenahme-Einrichtung. Die Probenahme soll unter Erhalt der im Fluid herrschenden Bedingungen durchgeführt werden. Zu diesen Bedingungen zählt auch der Durchfluss. Der Durchfluss durch die Probenahme-Einrichtung und insbesondere durch die Messzelle 317 sollte im Wesentlichen gleich bleiben. Der Durchfluss kann wie zuvor beschrieben mit einer geeigneten einstellbaren Blende reguliert werden. Damit insbesondere der Durchfluss durch die Messzelle 317 im Wesentlichen gleich oder kleiner ist als der in der restlichen Probenahme-Einrichtung, weist die Messzelle 317 eine angepasste Geometrie auf.

In der in Figur 6 gezeigten Aufsicht auf die Messzelle 317 ist zu erkennen, dass die Messzelle 317 in dieser Ebene einen im Vergleich zu den Verbindungsleitungen 324, 325 vergrösserten Durchmesser aufweist, anders ausgedrückt, die Messzelle 317 hat eine vergrösserte Grundfläche. Die Grösse der Grundfläche wird unter anderem durch den mit der Messzelle 317 zusammenwirkenden Sensor 304 (s. Figur 7) bestimmt, welcher gleichzeitig als Verschluss der Messzelle 317 wirken kann. Die Messzelle 317 kann auch durch ein geeignetes, vorzugsweise optisch transparentes Messfenster verschlossen werden, durch das hindurch der Sensor die in der Messzelle 317 befindliche Probe vermessen kann.

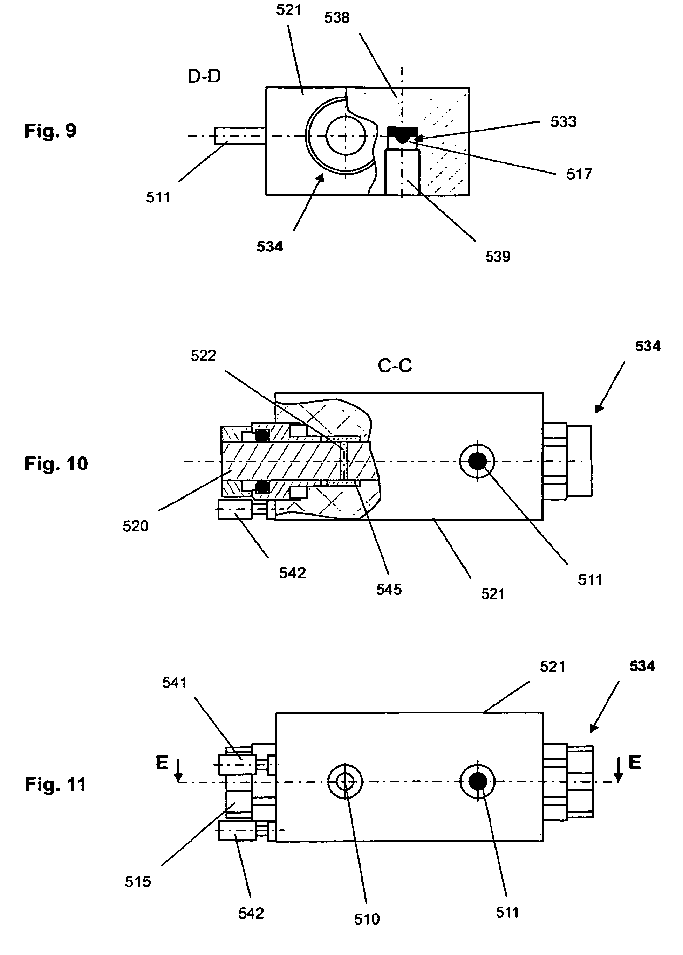

Damit trotz vergrösserter Grundfläche der Durchfluss aufrechterhalten wird, hat die Messzelle 317 einen geringeren Querschnitt als die Verbindungsleitungen 324, 325, (s. a. Figur 7). Die Wand der Messzelle 317 hat eine nach innen ausgeprägte Kontur 333, welche durch die Wand, ein Wandelement oder ein Verschlusselement (s. a. Figur 9) ausgebildet wird. Aufgrund dieser Ausgestaltung weist die Messzelle 317 einen im Wesentlichen gleichen oder kleineren Strömungsquerschnitt auf als die mit der Messzelle 317 verbundenen Verbindungsleitungen 324, 325.

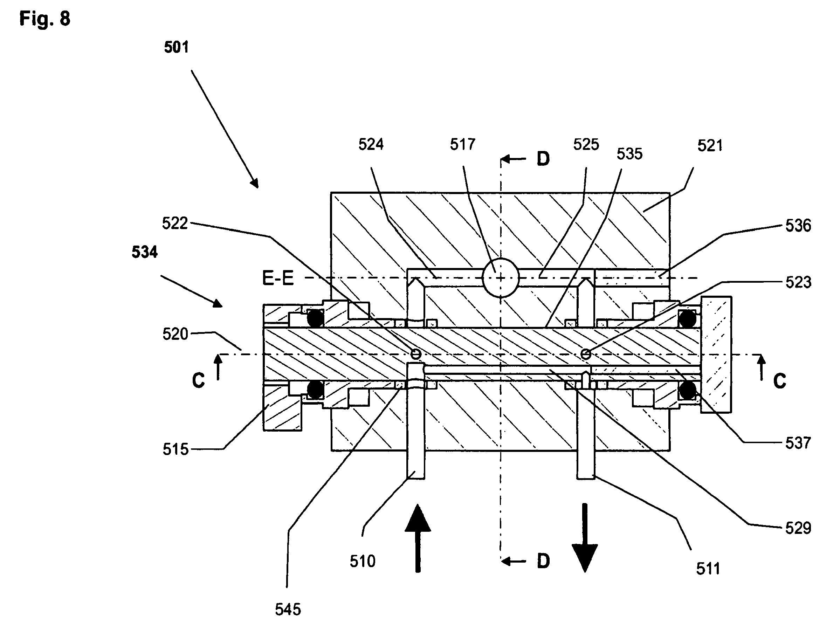

In Figur 8 ist eine weitere Probenahme-Einrichtung 501 mit einer integrierten Ventileinheit 534 im Schnitt gezeigt. Die integrierte Ventileinheit 534 und deren Funktion werden anhand der Figuren 9 bis 17 näher erläutert. Selbstverständlich kann die integrierte Ventileinheit 534 auch in anderen Geräten als der Probenahme-Einrichtung 501 eingesetzt werden.

Figur 8 zeigt die Probenahme-Einrichtung 501 mit einem Probenahme-Gehäuse 521, in dem eine Messzelle 517, eine erste und eine zweite mit der Messzelle 517 verbundene Verbindungsleitung 524, 525, ein Einlass 510 und ein Auslass 511 ausgebildet sind. Ferner ist in der Probenahme-Einrichtung 501 ein Ventilsitz 535 ausgebildet, in dem die integrierte Ventileinheit 534 um ihre Längsachse C-C drehbar gelagert ist.

In der hier gezeigten Ausgestaltung besteht das Probenahme-Gehäuse 521 aus einem transparenten Material, zum Beispiel einem Kunststoff, so dass die Probenahme-Einrichtung 501 visuell und/oder optisch auf eingeschlossene Luftblasen oder Verunreinigungen überprüft werden kann. Selbstverständlich kann das Probenahme-Gehäuse 521 auch aus einem nicht-transparenten Material bestehen. Die Verbindungsleitungen 524, 525 können wie hier gezeigt nach aussen mit einem geeigneten Verschlusselement 536 verschlossen sein, welches zum Beispiel zur Reinigung der Verbindungsleitungen 524, 525 und der Messzelle 517 entfernt werden kann.

Die integrierte Ventileinheit 534 umfasst einen im Wesentlichen zylinderförmigen Ventilkörper 520 mit einer ersten und einer zweiten Bohrung 522, 523 und einer Kurzschlussleitung 529. Die beiden Bohrungen 522, 523 sind hier orthogonal zur Längsachse C-C und in der in Figur 8 gezeigten zweiten Stellung des Ventils orthogonal zur Zeichnungsebene angeordnet. Die Längsachsen der Bohrungen 522, 523 können entweder parallel oder vorzugsweise unter einem Winkel zueinander angeordnet sein.

Die Kurzschlussleitung 529 verbindet in der zweiten Ventil-Stellung den Einlass 510 direkt mit dem Auslass 511, so dass der Einlass mit dem Fluid gespült und Lufteinschlüsse verdrängt werden können. Die Kurzschlussleitung 529 ist parallel und azentrisch zur Längsachse C-C angeordnet, so dass diese unabhängig von den Bohrungen 522, 523 ist. Wie hier gezeigt, kann sich die Kurzschlussleitung 529 zumindest bis zum einem Ende des Ventilkörpers 520 erstrecken. Die Kurzschlussleitung 529 kann gegebenenfalls mit einem weiteren Verschlusselement 537 verschlossen werden. Diese Ausgestaltung ist einfach herzustellen und erleichtert zudem die Reinigung der integrierten Ventileinheit 534.

Die integrierte Ventileinheit 534 weist ein erstes Stellelement 515 auf, mit dem die Ventileinheit 534 zwischen einer ersten und der in Figur 8 gezeigten zweiten Stellung bewegt werden kann. Dazu wird der Ventilkörper 520 der integrierten Ventileinheit 534 im Ventilsitz 535 um seine Drehachse C-C gedreht. Die Wirkung der integrierten Ventileinheit 534 als Blende wird nachfolgend genauer erläutert.

Figur 9 zeigt die Probenahme-Einrichtung aus Figur 8, wobei der Teil, welcher die Messzelle 517 enthält, im Schnitt entlang der Ebene D-D gezeigt ist. Die Messzelle 517 ist im Wesentlichen parallel zur Längsachse der integrierten Ventileinheit 534 angeordnet und weist eine Kontur 533 auf, welche wie bereits anhand der Figuren 6 und 7 diskutiert, dazu dient, den Durchfluss durch die Messzelle 517 anzupassen. Auf der der Kontur 533 gegenüberliegenden Seite der Messzelle 517 befindet sich im Probenahme-Gehäuse 521 eine Aussparung 539, über welche ein Sensor oder Teile davon mit der Messzelle 517 in Kontakt gebracht werden und/oder diese verschliessen können. Die Aussparung 539 kann auch mit einem geeigneten Messfenster verschlossen werden.

Figur 10 zeigt die Probenahme-Einrichtung aus Figur 8 und ist teilweise im Schnitt entlang der Ebene C-C dargestellt. Auf dem Probenahme-Gehäuse 521 ist die Öffnung des Auslasses 511 zu erkennen. Die erste Bohrung 522 erstreckt sich orthogonal zur Drehachse C-C der integrierten Ventileinheit 534 durch den Ventilkörper 520 hindurch. Das Ventil weist eine Dichtung 545 auf, damit kein Fluid zwischen Ventilkörper 520 und Ventilsitz 535 eindringen kann.

Figur 11 zeigt die Probenahme-Einrichtung aus Figur 8 als Ansicht entlang der Achse D-D, in welcher ein erster und zweiter Anschlag 541, 542 für das erste Stellelement zu erkennen sind.

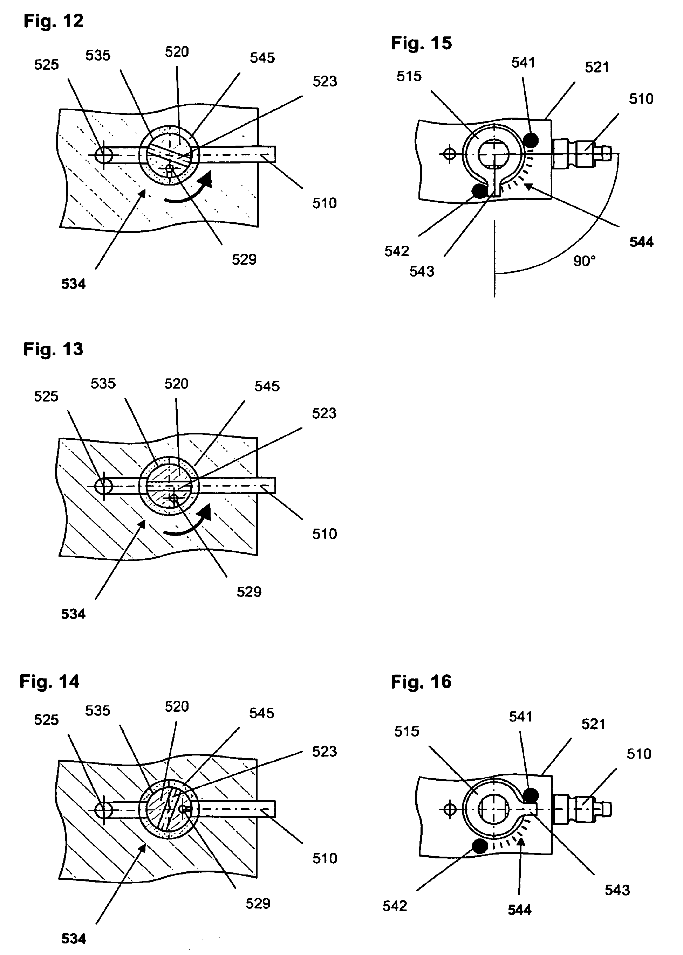

Die Figuren 12 bis 14 zeigen jeweils einen Schnitt durch die integrierte Ventileinheit aus Figur 8 durch den Auslass parallel zur Achse D-D. Die Blende ist vorzugsweise zwischen Messzelle und Auslass angeordnet. Selbstverständlich kann eine Blende auch zwischen der Messzelle und dem Einlass angeordnet sein oder die Probenahme-Einrichtung kann mehr als eine Blende enthalten.

In Figur 12 befindet sich die integrierte Ventileinheit 534 in einer ersten Stellung, in welcher der Auslass 511 über die zweite Bohrung 523 mit der zweiten Verbindungsleitung 525 verbunden ist. Wie hier zu erkennen, hat die Bohrung 523 einerseits einen kleineren Durchmesser als die Verbindungsleitung 525, wodurch der Querschnitt der Bohrung 523 verringert ist und eine feste Blende bereitgestellt wird. Zudem ist die Bohrung 523 in der ersten Stellung aus der Verbindungsachse zwischen Verbindungsleitung 525 und Auslass 511 herausgedreht, so dass die Bohrung 523 nicht vollständig mit der Verbindungsleitung 525 und dem Auslass 511 übereinstimmt. Die Blendenöffnung oder der Durchtrittsquerschnitt für das Fluid ist zusätzlich verkleinert. Die Austrittsöffnungen der Kurzschlussleitung 529 sind in dieser Ventilstellung gegen den Ventilsitz 535 gerichtet und durch diesen verschlossen.

Wird die integrierte Ventileinheit 534 gemäss dem in Figur 12 gezeigten Pfeil gedreht, so wird die Bohrung 523 zunächst wie in Figur 13 gezeigt parallel zur Verbindungsachse zwischen Verbindungsleitung 525 und Auslass 511 gestellt. In dieser Position ist die Blende maximal geöffnet und die Messzelle wird automatisch gespült, so dass mögliche Blasen und Ablagerungen entfernt werden.

Wird die integrierte Ventileinheit 534 weiter in die durch den Pfeil angezeigte Richtung gedreht, so werden nun die Austrittsöffnungen der Bohrung 523 gegen den Ventilsitz 535 gedreht und durch diesen verschlossen. Gleichzeitig wird die Kurzschlussleitung 529 orthogonal zur Verbindungsachse zwischen Verbindungsleitung 525 und Auslass 511 gestellt, so dass dieser den Einlass und den Auslass direkt verbindet (s. a. Figur 8). Die integrierte Ventileinheit 534 befindet sich nun in der zweiten Stellung, in der die Messzelle vom Einlass und Auslass 511 abgetrennt ist und der Einlass gespült werden kann.

Der Drehwinkel zwischen der ersten und der zweiten Stellung beträgt hier ungefähr 90°. Damit der Benutzer die erste und zweite Ventil-Stellung eindeutig einstellen kann, sind, wie in den Figuren 11, 15 und 16 gezeigt, aussen auf dem Probenahme-Gehäuse 521 der Probenahme-Einrichtung ein erster und ein zweiter Anschlag 541, 542 angebracht. Das erste Stellelement 515 hat einen Vorsprung 543, welcher zwischen den beiden Anschlägen 541, 542 bewegt wird, wenn der Ventilkörper zwischen der ersten und zweiten Stellung bewegt wird.

Zwischen den beiden Anschlägen 541, 542 ist eine Skala 544 angebracht, so dass auch Stellungen zwischen den beiden Anschlägen reproduzierbar eingestellt werden können und so unterschiedliche Blenden eingestellt werden können.

In weiteren Ausgestaltungen kann zur Einstellung der Blende der Abstand zwischen den beiden Anschläge 541, 542 verändert werden oder die Anschläge 541, 542 können auf einem um die Längsachse des Ventilkörpers drehbaren Mittel angeordnet sein, welches in Relation zu den Bohrungen im Ventilkörper einstellbar und fixierbar ist. Auf diese Weise wirken die Anschläge 541, 542 bzw. das drehbare Mittel als zweites Stellelement.

Bei einer Anordnung der ersten und zweiten Bohrung unter einem Winkel zueinander stimmt die Längsachse der ersten Bohrung in der ersten Stellung vorzugsweise mit den daran anschliessenden Öffnungen des Einlasses und des ersten Verbindungskanals überein. In diesem Fall wirkt nur die zweite Bohrung als Blende.

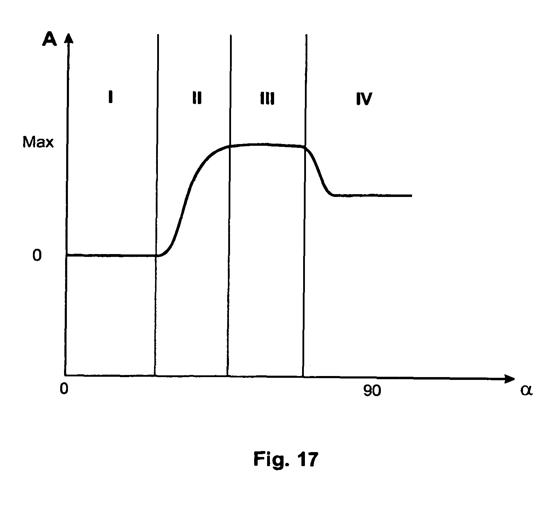

Zur Veranschaulichung des Zusammenhangs zwischen dem Drehwinkel α des ersten Stellelements und der Blendenöffnung A ist dieser in Figur 17 schematisch in Form eines Diagramms dargestellt, in dem die beiden Grössen gegeneinander aufgetragen sind. Bei einem Drehwinkel von α = 0, welches der zweiten Stellung des Ventils entspricht, ist die Blende geschlossen (Abschnitt I). Das Ventil ist so eingestellt, dass der Einlass direkt mit dem Auslass verbunden ist. Nun wird die Drehung des ersten Stellelements eingeleitet und das Ventil um 90° in die erste Ventil-Stellung gedreht. Während der Drehung wird die Blende geöffnet (Abschnitt II), bis die Bohrung parallel zur Verbindungsachse zwischen der Verbindungsleitung und dem Auslass ausgerichtet ist (Abschnitt III). In dieser Position wird das Fluid vom Einlass durch die Messzelle zum Auslass geleitet und die Messzelle gespült. Die Blende ist maximal geöffnet. Wird das erste Stellelement weiter zum anderen Anschlag und somit in die erste Stellung bewegt, so wird die Bohrung teilweise aus der Verbindungsachse herausgedreht und die Öffnung der Blende wird bis zur gewünschten oder bis zur durch den Anschlag vorgegebenen Grösse verkleinert.

### Bezugszeichenliste

| | |
|---|---|
| 1, 501 | Probenahme-Einrichtung |
| 2 | Analyse-Gehäuse |
| 3 | Transmitter / Prozessoreinheit |
| 4, 304 | Sensor |
| 5 | Schnittstelle |
| 6 | Griff |
| 7 | Anzeige |
| 8 | Sender-Empfänger-Einheit |
| 9 | Anschluss |
| 10, 110, 510 | Einlass |
| 11, 111, 511 | Auslass |
| 12 | Leitung |
| 13 | Leitung |
| 14 | Abfallbehältnis |
| 15, 115, 515 | erstes Stellelement |
| 116 | Anschlag |
| 17,317,517 | Messzelle |
| 118 | Ventileinheit |
| 119, 219 | Schieber |
| 120, 220, 520 | Ventilkörper |
| 121, 521 | Probenahme-Gehäuse |
| 122, 522 | erste Bohrung |
| 123, 523 | zweite Bohrung |
| 124, 324, 524 | erste Verbindungsleitung |
| 125, 325, 525 | zweite Verbindungsleitung |
| 126, 226 | Aussparung |
| 127, 227 | elastisches Element |
| 128, 228, 528 | zweites Stellelement |
| 129, 529 | Kurzschlussleitung |
| 230 | Einsatz |
| 232 | Querschnitt |
| 333, 533 | Kontur |
| 534 | integrierte Ventileinheit |
| 135, 535 | Ventilsitz |
| 536 | Verschlusselement |
| 537 | Verschlusselement |
| 539 | Aussparung |
| 541 | erster Anschlag |
| 542 | zweiter Anschlag |
| 543 | Vorsprung |
| 544 | Skala |
| 545 | Dichtung |

## Patentansprüche

1. Probenahme-Einrichtung zur Probenahme von einem druckbeaufschlagten und/oder flüchtige Bestandteile enthaltenden Fluid, welche ein Probenahme-Gehäuse (121, 521), einen Einlass (10, 110, 510), einen Auslass (11, 111, 511), eine Messzelle (17, 317, 517) und eine Ventileinheit (118, 534) mit einem Ventil aufweist, mittels welchem in einer ersten Stellung der Einlass (10, 110, 510) über die Messzelle (17, 317, 517) mit dem Auslass (11, 111, 511) verbindbar ist und mittels welchem in einer zweiten Stellung der Einlass (10, 110, 510) direkt mit dem Auslass (11, 111, 511) verbindbar und die Messzelle (17, 317, 517) von Einlass (10, 110, 510) und Auslass (11, 111, 511) abtrennbar ist, **dadurch gekennzeichnet, dass** die Ventileinheit (118, 534) mindestens eine einstellbare Blende umfasst, mit der der Durchfluss des Fluids durch die Probenahme-Einrichtung regelbar ist.

2. Probenahme-Einrichtung nach Anspruch 1, **dadurch gekennzeichnet, dass** das Ventil einen im Wesentlichen zylinderförmigen Ventilkörper (120, 220, 520) aufweist, welcher in einem Ventilsitz (135, 535) gelagert ist und mittels eines ersten Stellelements (15, 115, 515) um seine Längsachse drehbar ist.

3. Probenahme-Einrichtung nach Anspruch 2, **dadurch gekennzeichnet, dass** der Ventilkörper (120, 220, 520) eine erste und eine zweite Bohrung (122, 522; 123, 523) zur Verbindung des Einlasses (10, 110, 510) oder Auslasses (11, 111, 511) mit der Messzelle (17, 317, 517) und eine Kurzschlussleitung (129, 529) zur Verbindung von Einlass (10, 110, 510) und Auslass (11, 111, 511) aufweist, wobei die Bohrungen (122, 522; 123, 523) oder die Kurzschlussleitung (129, 529) azentrisch zur Drehachse des Ventilkörpers (120, 220, 520) ausgestaltet ist.

4. Probenahme-Einrichtung nach Anspruch 3, **dadurch gekennzeichnet, dass** die Kurzschlussleitung (129, 529) azentrisch und parallel zur Drehachse des Ventilkörpers (120, 220, 520) ausgebildet ist.

5. Probenahme-Einrichtung nach Anspruch 3, **dadurch gekennzeichnet, dass** die erste und/oder zweite Bohrung (122, 522; 123, 523) die Drehachse des Ventilkörpers (120, 220, 520) schneidet.

6. Probenahme-Einrichtung nach einem der Ansprüche 1 bis 5, **dadurch gekennzeichnet, dass** der Ventilkörper (120, 220, 520), die Blende, der Einlass (10, 110, 510) und der Auslass (11, 111, 511) im Probenahme-Gehäuse (121, 521) angeordnet sind und die Messzelle (17, 517), der Ventilsitz und eine erste und eine zweite mit der Messzelle verbundene Verbindungsleitung (124, 524; 125, 525) im Probenahme-Gehäuse (121, 521) ausgebildet sind.

7. Probenahme-Einrichtung nach einem der Ansprüche 1 bis 6, **dadurch gekennzeichnet, dass** die erste und/oder zweite Bohrung (522, 523) im Ventilkörper (520) einen kleineren Durchmesser hat als die mit dieser Bohrung verbindbare erste oder zweite Verbindungsleitung (524, 525).

8. Probenahme-Einrichtung nach einem der Ansprüche 1 bis 7, **dadurch gekennzeichnet, dass** die einstellbare Blende, insbesondere mit einem zweiten Stellelement (128, 228, 528), kontinuierlich oder in vorgegebenen Schritten einstellbar und/oder fixierbar ist.

9. Probenahme-Einrichtung nach einem der Ansprüche 1 bis 8, **dadurch gekennzeichnet, dass** die einstellbare Blende als Schieber (119, 219) mit einer Aussparung (126, 226) ausgebildet ist, welcher Schieber (119, 219) zumindest teilweise im Ventilkörper (120) angeordnet und entlang der Drehachse des Ventilkörpers verschiebbar ist.

10. Probenahme-Einrichtung nach Anspruch 9, **dadurch gekennzeichnet, dass** die Ventileinheit (118) ein elastisches Element (127, 227) aufweist, welches im Ventilkörper (120, 220) angeordnet ist und am im Ventilkörper befindlichen Ende des Schiebers anliegt.

11. Probenahme-Einrichtung nach einem der Ansprüche 1 bis 8, **dadurch gekennzeichnet, dass** der Ventilkörper und die einstellbare Blende eine integrierte Ventileinheit (534) bilden, wobei die Blendeneinstellung in Abhängigkeit des Schwenkwinkels des Ventilkörpers (520) einstellbar ist.

12. Probenahme-Einrichtung nach Anspruch 2 bis 11, **dadurch gekennzeichnet, dass** diese einen ersten und zweiten Anschlag (541, 542) zur Begrenzung der Drehbewegung des Ventilkörpers aufweist.

13. Probenahme-Einrichtung nach einem der Ansprüche 1 bis 12, **dadurch gekennzeichnet, dass** die Messzelle (317) bei im Wesentlichen gleichen Strömungsquerschnitt eine grössere Grundfläche als die erste und zweite Verbindungsleitung (324; 325) hat.

14. Probenahme-Einrichtung nach einem der Ansprüche 1 bis 13, **dadurch gekennzeichnet, dass** die Probenahme-Einrichtung im Wesentlichen transparent ausgestaltet ist.

15. Analysegerät mit einer Probenahme-Einrichtung nach einem der Ansprüche 1 bis 14 zur Bestimmung einer chemischen oder physikalischen Grösse einer Probe eines druckbeaufschlagten und/oder flüchtige Bestandteile enthaltenden Fluids, welches Analysegerät ein Analyse-Gehäuse (2) aufweist, in dem ein Sensor (4), der mit einer Messzelle der Probenahme-Einrichtung (1) zusammenwirkt, und ein Transmitter (3) angeordnet sind, **dadurch gekennzeichnet, dass** die Probenahme-Einrichtung (1) und das Analyse-Gehäuse (2) lösbar miteinander verbunden sind.

16. Verfahren zur Probenahme aus einem druckbeaufschlagten und/oder flüchtige Bestandteile enthaltenden Fluid mit einer Probenahme-Einrichtung nach einem der Ansprüche 1 bis 14, welche ein Probenahme-Gehäuse (121, 521), einen Einlass (10, 110, 510), einen Auslass (11, 111,511), eine Messzelle (17, 317, 517) und eine Ventileinheit (118, 534) mit einem Ventil aufweist, welches in einer ersten Stellung den Einlass (10, 110, 510) über die Messzelle (17, 317, 517) mit dem Auslass (11, 111, 511) verbindet und welches in einer zweiten Stellung den Einlass (10, 110, 510) direkt mit dem Auslass (11, 111, 511) verbindet und die Messzelle (17, 317, 517) von Einlass (10, 110, 510) und Auslass (11, 111, 511) abtrennt, **dadurch gekennzeichnet, dass** das Verfahren die folgenden Schritte aufweist:
a. Einstellen der zweiten Stellung der Ventileinheit;
b. Anschliessen eines das Fluid enthaltenden Behältnisses an den Einlass und Spülen von Einlass und Auslass mit dem Fluid;
c. Einstellen der ersten Stellung der Ventileinheit, so dass das Fluid zwischen Einlass und Auslass die Messzelle durchspült;
d. Nehmen einer Durchflussprobe in der ersten Stellung, in der das Fluid die Messzelle durchströmt oder Einstellen der zweiten Stellung, so dass eine stationäre Probe in der Messzelle eingeschlossen wird;
wobei die Ventileinheit mindestens eine einstellbare Blende umfasst, mit der der Durchfluss des Fluids durch die Probenahme-Einrichtung geregelt wird.

## Claims

1. Sampling device for taking samples from a fluid that is pressurized and/or contains volatile components, comprising a sampling housing (121, 521), an inlet (10, 110, 510), an outlet (11, 111, 511), a measuring cell (17, 317, 517) and a valve unit (118, 534) with a valve which, in a first position, serves to connect the inlet (10, 110, 510) by way of the measuring cell (17, 317, 517) to the outlet (11, 111, 511) and, in a second position, serves to connect the inlet (10, 110, 510) directly to the outlet (11, 111, 511) and to simultaneously disconnect the measuring cell (17, 317, 517) from the inlet (10, 110, 510) and the outlet (11, 111, 511), **characterized in that** the valve unit (118, 534) comprises at least one adjustable flow restrictor operable to regulate the flow of the fluid through the sampling device.

2. Sampling device according to claim 1, **characterized in that** the valve comprises a substantially cylindrical valve body (120, 220, 520) which is held in a valve seat (135, 535) and is capable of being turned about its longitudinal axis by means of a first actuator element (15, 115, 515).

3. Sampling device according to claim 2, **characterized in that** the valve body (120, 220, 520) comprises a first and a second bore channel (122, 522; 123, 523) to connect the inlet (10, 110, 510) or the outlet (11, 111, 511) to the measuring cell (17, 317, 517), and further comprises a short-circuit channel (129, 529) to connect the inlet (10, 110, 510) to the outlet (11, 111, 511), wherein the short-circuit channel (129, 529) or the bore channels (122, 522; 123, 523) are offset from the axis of rotation of the valve body (120, 220, 520).

4. Sampling device according to claim 3, **characterized in that** the short-circuit channel (129, 529) is designed to run non-concentric with, and parallel to, the axis of rotation of the valve body (120, 220, 520).

5. Sampling device according to claim 3, **characterized in that** the first and/or second bore channel (122, 522; 123, 523) intersects the axis of rotation of the valve body (120, 220, 520).

6. Sampling device according to one of the claims 1 to 5, **characterized in that** the valve body (120, 220, 520), the flow restrictor, the inlet (10, 110, 510) and the outlet (11, 111, 511) are arranged in the sampling housing (121, 521), and that the measuring cell (17, 517), the valve seat, as well as a first and a second connector channel (124, 524; 125, 525) which are connected to the measuring cell are formed in the sampling housing (121, 521).

7. Sampling device according to one of the claims 1 to 6, **characterized in that** the first and/or the second bore channel (522, 523) in the valve body (520) has a smaller diameter than the first or second connector channel (524, 525) which can be connected, respectively, to the first and/or second bore channel (522, 523).

8. Sampling device according to one of the claims 1 to 7, **characterized in that** the adjustable flow restrictor can be adjusted and/or secured at a fixed setting within a continuous range or in prescribed steps.

9. Sampling device according to one of the claims 1 to 8, **characterized in that** the adjustable flow restrictor is configured as a slider (119, 219) with a passage opening (126, 226), said slider (119, 219) being arranged at least partially inside the valve body (120) and capable of being moved along the axis of rotation of the valve body.

10. Sampling device according claim 9, **characterized in that** the valve unit (118) comprises an elastic element (127, 227) which is arranged inside the valve body (120, 220) abutting that end of the slider which is located inside the valve body.

11. Sampling device according to one of the claims 1 to 8, **characterized in that** the valve body and the adjustable flow restrictor form an integrated valve unit (534), wherein the flow restrictor aperture is adjustable as function of the turning angle of the valve body (520).

12. Sampling device according to one of the claims 2 to 11, **characterized in that** the sampling device comprises a first and a second end stop (541, 542) serving to delimit the range of rotation of the valve body.

13. Sampling device according to one of the claims 1 to 12, **characterized in that** the measuring cell (317), while offering a substantially equal cross-sectional area to the flow stream, has a larger base surface than the first and the second connector channel (324, 325).

14. Sampling device according to one of the claims 1 to 13, **characterized in that** the sampling device is designed to be substantially transparent.

15. Analytical instrument equipped with a sampling device according to one of the claims 1 to 14 for determining chemical and/or physical parameter of a sample of a fluid that is pressurized and/or contains volatile components, wherein said analytical instrument comprises an analysis housing (2) in which a sensor (4) cooperating with a measuring cell of the sampling device (1) and a transmitter (3) are arranged, **characterized in that** the sampling device (1) and the analysis housing (2) are separably connected to each other.

16. Method for taking samples from a fluid that is pressurized and/or contains volatile components, said method being performed with a sampling device according to one of the claims 1 to 14 comprising a sampling housing (121, 521), an inlet (10, 110, 510), an outlet (11, 111, 511), a measuring cell (17, 317, 517) and a valve unit (118, 534) with a valve which, in a first position, connects the inlet (10, 110, 510) by way of the measuring cell (17, 317, 517) to the outlet (11, 111, 511) and, in a second position, connects the inlet (10, 110, 510) directly to the outlet (11, 111, 511) and simultaneously disconnects the measuring cell (17, 317, 517) from the inlet (10, 110, 510) and the outlet (11, 111, 511), **characterized in that** the method comprises the following steps:
a. setting the valve unit to the second position;
b. connecting to the inlet a container that contains the fluid, and flushing the inlet and outlet with the fluid;
c. setting the valve unit to the first position, so that the fluid flushes through the measuring cell in the flow path between inlet and outlet;
d. taking of a flow-through sample in the first position where the fluid flows through the measuring cell, or setting the valve unit to the second position so that a stationary sample is locked into the measuring cell;
wherein the valve unit comprises at least one adjustable flow restrictor whereby the flow of the fluid through the sampling device is regulated.

## Revendications

1. Dispositif de prélèvement d'échantillon pour le prélèvement d'échantillon sur un fluide alimenté en pression et/ou contenant des composants volatils, qui présente un boîtier de prélèvement d'échantillon (121, 521), une entrée (10, 110, 510), une sortie (11, 111, 511), une cellule de mesure (17, 317, 517) et une unité de vanne (118, 534) avec une vanne, au moyen de laquelle l'entrée (10, 110, 510) peut être reliée dans une première position via la cellule de mesure (17, 317, 517) à la sortie (11, 111, 511) et au moyen de laquelle l'entrée (10, 110, 510) peut être reliée directement à la sortie (11, 111, 511) dans une seconde position et la cellule de mesure (17, 317, 517) peut être séparée de l'entrée (10, 110, 510) et de la sortie (11, 111, 511), **caractérisé en ce que** l'unité de vanne (118, 534) comprend au moins un cache réglable, avec lequel le débit du fluide peut être réglé par le dispositif de prélèvement d'échantillon.

2. Dispositif de prélèvement d'échantillon selon la revendication 1, **caractérisé en ce que** la vanne présente un corps de vanne (120, 220, 520) sensiblement cylindrique, qui est monté dans un siège de vanne (135, 535) et peut tourner autour de son axe longitudinal au moyen d'un premier élément de réglage (15, 115, 515).

3. Dispositif de prélèvement d'échantillon selon la revendication 2, **caractérisé en ce que** le corps de vanne (120, 220, 520) présente un premier et un second alésage (122, 522 ; 123, 523) pour la liaison de l'entrée (10, 110, 510) ou de la sortie (11, 111, 511) avec la cellule de mesure (17, 317, 517) et une conduite de court-circuit (129, 529) pour la liaison de l'entrée (10, 110, 510) et de la sortie (11, 111, 511), les alésages (122, 522 ; 123, 523) ou la conduite de court-circuit (129, 529) étant conçus de façon excentrée par rapport à l'axe de rotation du corps de vanne (120, 220, 520).

4. Dispositif de prélèvement d'échantillon selon la revendication 3, **caractérisé en ce que** la conduite de court-circuit (129, 529) est conçue de façon excentrée et parallèle à l'axe de rotation du corps de vanne (120, 220, 520).

5. Dispositif de prélèvement d'échantillon selon la revendication 3, **caractérisé en ce que** le premier et/ou le second alésage (122, 522 ; 123, 523) coupe l'axe de rotation du corps de vanne (120, 220, 520).

6. Dispositif de prélèvement d'échantillon selon l'une des revendications 1 à 5, **caractérisé en ce que** le corps de vanne (120, 220, 520), le cache, l'entrée (10, 110, 510) et la sortie (11, 111, 511) sont disposés dans le boîtier de prélèvement d'échantillon (121, 521) et la cellule de mesure (17, 517), le siège de vanne et une première et une seconde conduite de liaison (124, 524 ; 125 ; 525) reliée à la cellule de mesure sont conçus dans le boîtier de prélèvement d'échantillon (121, 521).

7. Dispositif de prélèvement d'échantillon selon l'une des revendications 1 à 6, **caractérisé en ce que** le premier et/ou le second alésage (522, 523) a/ont dans le corps de vanne (520) un plus petit diamètre que la première ou la seconde conduite de liaison (524, 525) pouvant être reliée à cet alésage.

8. Dispositif de prélèvement d'échantillon selon l'une des revendications 1 à 7, **caractérisé en ce que** le cache réglable peut être réglé et/ou fixé de façon continue ou par incréments prédéfinis, en particulier avec un second élément de réglage (128, 228, 528).

9. Dispositif de prélèvement d'échantillon selon l'une des revendications 1 à 8, **caractérisé en ce que** le cache réglable est conçu sous forme de coulisseau (119, 219) avec un évidement (126, 226), lequel coulisseau (119, 219) est disposé au moins partiellement dans le corps de vanne (120) et peut coulisser le long de l'axe de rotation du corps de vanne.

10. Dispositif de prélèvement d'échantillon selon la revendication 9, **caractérisé en ce que** l'unité de vanne (118) présente un élément (127, 227) élastique, qui est disposé dans le corps de vanne (120, 220) et s'applique sur l'extrémité, se trouvant dans le corps de vanne, du coulisseau.

11. Dispositif de prélèvement d'échantillon selon l'une des revendications 1 à 8, **caractérisé en ce que** le corps de vanne et le cache réglable forment une unité de vanne (534) intégrée, le dispositif de cache étant réglable en fonction de l'angle de basculement du corps de vanne (520).

12. Dispositif de prélèvement d'échantillon selon les revendications 2 à 11, **caractérisé en ce que** celui-ci présente une première et une seconde butée (541, 542) pour la limitation du mouvement de rotation du corps de vanne.

13. Dispositif de prélèvement d'échantillon selon l'une des revendications 1 à 12, **caractérisé en ce que** la cellule de mesure (317) présente une surface de base plus grande que la première et la seconde conduite de liaison (324 ; 325) pour une section d'écoulement sensiblement identique.

14. Dispositif de prélèvement d'échantillon selon l'une des revendications 1 à 13, **caractérisé en ce que** le dispositif de prélèvement d'échantillon est conçu sensiblement transparent.

15. Appareil d'analyse doté d'un dispositif de prélèvement d'échantillon selon l'une des revendications 1 à 14 pour déterminer une grandeur chimique ou physique d'un échantillon d'un fluide sollicité par pression et/ou contenant des composants volatils, lequel appareil d'analyse présente un boîtier d'analyse (2), dans lequel un capteur (4), qui coopère avec une cellule de mesure du dispositif de prélèvement d'échantillon (1), et un transmetteur (3) sont disposés, **caractérisé en ce que** le dispositif de prélèvement d'échantillon (1) et le boîtier d'analyse (2) sont reliés l'un à l'autre de façon amovible.

16. Procédé pour le prélèvement d'échantillon sur un fluide sollicité en pression et/ou contenant des composants volatils avec un dispositif de prélèvement d'échantillon selon l'une des revendications 1 à 14, qui présente un boîtier de prélèvement d'échantillon (121, 521), une entrée (10, 110, 510), une sortie (11, 111, 511), une cellule de mesure (17, 317, 517) et une unité de vanne (118, 534) avec une vanne, qui, dans une première position, relie l'entrée (10, 110, 510) par la cellule de mesure (17, 317, 517) à la sortie (11, 111, 511) et qui, dans une seconde position, relie l'entrée (10, 110, 510) directement à la sortie (11, 111, 511) et sépare la cellule de mesure (17, 317, 517) de l'entrée (10, 110, 510) et de la sortie (11, 111, 511), **caractérisé en ce que** le procédé présente les étapes suivantes :
a. réglage de la seconde position de l'unité de vanne ;
b. raccordement d'un récipient contenant le fluide à l'entrée et lavage de l'entrée et de la sortie avec le fluide ;
c. réglage de la première position de l'unité de vanne, de sorte que le fluide traverse la cellule de mesure entre l'entrée et la sortie ;
d. réception d'un échantillon d'écoulement dans la première position, dans laquelle le fluide traverse la cellule de mesure ou réglage de la seconde position, de sorte qu'un échantillon fixe est enfermé dans la cellule de mesure ;
l'unité de vanne comprenant au moins un cache réglable, avec lequel le débit du fluide est réglé par le dispositif de prélèvement d'échantillon.
